# EUROPÄISCHE PATENTSCHRIFT

(11) **EP 1 114 745 B1**
(45) Veröffentlichungstag und Bekanntmachung des Hinweises auf die Patenterteilung: **14.02.2007**
(21) Anmeldenummer: 00126369.8
(22) Anmeldetag: 02.12.2000
(51) Int. Cl.: B60K 28/00, B60R 21/01

(54) **Vorrichtung zur Detektion von Überschlägen bei einem Fahrzeug**
Device for detecting roll-over of a vehicle
Dispositif pour détecter des basculements d'un véhicule

(30) Priorität: 08.01.2000 DE 10000550
(43) Veröffentlichungstag der Anmeldung: 11.07.2001
(73) Patentinhaber: Bayerische Motoren Werke Aktiengesellschaft, 80809 München (DE)
(72) Erfinder: Griessbach, Robert, 83629 Weyarn (DE)

(56) Entgegenhaltungen:
- DE-A1- 3 737 554
- DE-A1- 19 736 328

## Beschreibung

Die Erfindung betrifft eine Vorrichtung zur Detektion von Überschlägen bei einem Fahrzeug gemäß dem Oberbegriff des Anspruchs 1. Aus der DE 197 36 328 A1 ist eine gattungsgemäße Vorrichtung bekannt.

Zur Detektion von Überschlägen bei einem Fahrzeug sind verschiedene Verfahren und Vorrichtungen bekannt. Die meisten bekannten Verfahren basieren auf der Auswertung von verschiedenen Sensoren, welche den Überschlag unmittelbar anzeigen, wie z.B. Drehraten- und Beschleunigungssensoren. Diese Sensoren sind in der Regel in einem gemeinsamen Gehäuse angeordnet und werden von einem gemeinsamen Mikroprozessor ausgewertet. Der Mikroprozessor verrechnet die erfaßten Meßwerte und gibt die daraus gewonnene Information über einen bevorstehenden oder ablaufenden Überschlag an ein Airbag-Steuergerät aus, welches wiederum die entsprechenden Sicherheitssysteme, wie beispielsweise Seiten-, Front-und Kopfairbag oder Gurtstraffer, auslöst.

Nachteilig bei den bekannten Vorrichtungen ist die Anfälligkeit gegenüber Erfassungs- und Auswertefehler. So ist es denkbar, daß es aufgrund von fehlerhaften Überschlagsinformationen, wegen eines fehlerhaften Sensors oder einer fehlerhaft arbeitenden Steuervorrichtung zu einer Fehlauslösung einer Sicherheitsausrüstung kommt. Auch ein fehlerhafter Algorithmus oder eine fehlerhafte Datenübertragung zwischen der Überrollsensorik und der Airbagauslöseeinheit können zu einer Fehlauslösung führen. In diesem Zusammenhang sind auch Reparaturarbeiten an einem Fahrzeug bei einem aktiven Sicherheitssystem problematisch. Bei einem Abmontieren eines Überrollsensors von einem Fahrzeug kann beispielsweise eine Drehrate erzeugt werden, die zur Auslösung des Sicherheitssystems führt.

Solche Fehlauslösungen von Sicherheitseinrichtungen, wie z.B. Airbags, sind zu vermeiden. Dies ist die Aufgabe der vorliegenden Erfindung.

Diese Aufgabe wird gelöst durch die im Anspruch 1 angegebenen Merkmale.

Demgemäß ist es ein wesentlicher Gedanke der vorliegenden Erfindung, zusätzlich die Informationen von Raddrehzahlsensoren auszuwerten und zur Plausibilitätsüberprüfung eines Überrollsignals zu verwenden. Bei einer normalen Fahrt mit guter Bodenhaftung sind alle vier Raddrehzahlen gleich oder zumindest in der gleichen Größenordnung. Bei Kurvenfahrten können sich geringfügige Unterschiede ergeben, die aber über Lenkwinkelinformationen korrigiert werden können. Bei einem beginnenden Überschlag werden zunächst zwei, im Verlauf des Überschlags, alle vier Räder den Bodenkontakt verlieren. Diese Information wird bei der vorliegenden Erfindung ausgenutzt. Aufgrund der unterschiedlichen Zeitpunkte des Abhebens der Räder und der unterschiedlichen Reibungsverhältnisse der angetriebenen und nicht angetriebenen Räder stellen sich Raddrehzahlen ein, die im normalen Fahrbetrieb nicht auftreten können. Mit diesen Informationen liegen Informationen vor, die zur Plausibilitätsüberprüfung der Überrollsignale ausgenutzt werden können, so daß eine Fehlauslösung eines Sicherheitssystems verhindert werden kann.

Gemäß verschiedenen Ausführungsformen ist es möglich, bei hinterlegten Algorithmen verschiedene Überroll-Abläufe zu berücksichtigen. Geht einem Überschlag beispielsweise eine Vollbremsung voraus, könnte möglicherweise beim Abheben der Räder von der Fahrbahnoberfläche ein schlagartiges Abbremsen der Räder beobachtet werden. Diese Information könnte ebenfalls als Zusatzinformation genutzt und in dem Algorithmus verarbeitet werden.

Die Steuervorrichtung generiert ein Auslösesignal für ein Sicherheitssystem zunächst auf der Basis des Überschlagsignals, berücksichtigt jedoch dann die Raddrehzahlsignale und entscheidet aufgrund dieser Plausibilitätsüberprüfung, ob eine Auslösung der Sicherheitseinrichtung geschehen soll. Erfindungsgemäß werden Raddrehzahlsensoren an allen Rädern vorgesehen, so daß über die Auswertung von noch mehr Informationen der vorliegende Stabilitätszustand des Fahrzeugs genauer analysiert werden kann.

Als Überrollsensoren können beispielsweise Drehraten- und/oder Beschleunigungssensoren verwendet werden. Dies ist allgemein bekannt.

Wie oben bereits erwähnt, ist es bei der Verwendung von mehreren Raddrehzahlsensoren vorteilhaft, die Information eines Lenkwinkelsensors oder eines anderen Sensors, der zusätzliche Informationen zu einer Kurvenfahrt gibt, zu berücksichtigen. Die bei einer Kurvenfahrt auftretenden Raddrehzahlunterschiede können dann ausgeglichen werden.

Um als Fehlerquelle einen fehlerhaft arbeitenden Mikroprozessor erfassen zu können, ist es zudem vorteilhaft, für alle oder für jeden Überrollsensor eine eigene Auswerteeinheit zur Auswertung des jeweiligen Überrollsignals vorzusehen und diese Auswerteeinheit dann mit der Steuereinrichtung zu verbinden. Damit wird die Plausibilitätsinformation in einer separaten Komponente, nämlich der Steuervorrichtung, gewonnen, die von der Überrollsensorik, also dem Sensor selbst, und der Auswerteeinheit, unabhängig ist. Ein Fehler im Rechenwerk des Mikroprozessors selbst kann damit erkannt werden und führt nicht zu einer Fehlauslösung.

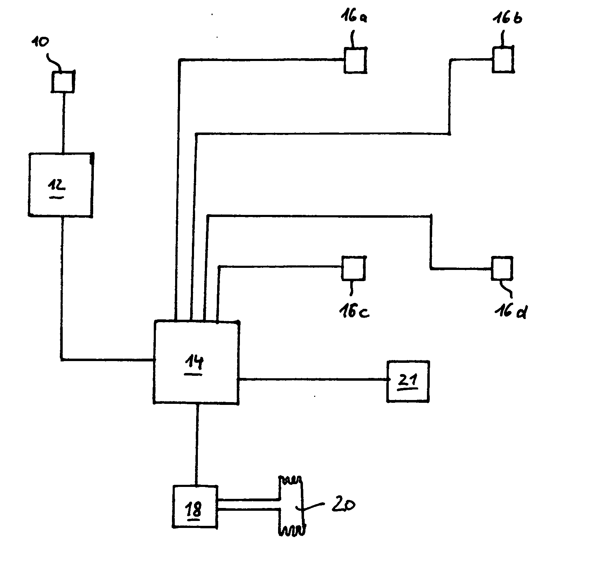

Die vorliegende Erfindung wird nachfolgend anhand eines konkreten Ausführungsbeispiels und mit Bezug auf die einzige Zeichnung näher erläutert. Die einzige Zeichnung zeigt in schematischer Blockdarstellung eine Ausführungsform der vorliegenden Erfindung.

In herkömmlicher Weise ist ein Überschlagsensor in Form Drehratensensors 10 in einem nicht dargestellten Fahrzeug vorgesehen, der mit einer eigenen Auswerteeinheit 12 verbunden ist. Bei einem Fahrzeugüberschlag erzeugt der Drehratensensor ein entsprechendes Drehratensignal, welches von der Auswerteeinheit 12 ausgewertet und beim Überschreiten eines bestimmten Wertes an eine Steuervorrichtung 14, mit welcher die Auswerteeinheit 12 verbunden ist, gemeldet wird.

Die Steuereinheit 14 ist zudem mit vier Raddrehzahlsensoren 16a, 16b, 16c und 16d verbunden, welche ihre Raddrehzahlsignale an die Steuervorrichtung 14 abgeben.

Zudem ist die Steuereinrichtung 14 mit einem Lenkwinkelsensor 21 verbunden, der die Fahrtrichtung des Fahrzeugs übermittelt. Aus den Informationen der Raddrehzahlsensoren 16a bis 16b kann die Steuervorrichtung 14 aufgrund eines hinterlegten Algorithmusses erkennen, ob eine normale Fahrsituation, beispielsweise eine Geradeausfahrt oder eine Kurvenfahrt, oder eine kritische Fahrsituation, beispielsweise ein Schleudervorgang, vorliegt bzw. ob die verschiedenen Raddrehzahlen nicht zueinander passen. Aufgrund der gewonnenen Zusatzinformationen über die Raddrehzahlsensoren 16a bis 16d überprüft die Steuervorrichtung 14 die von der Auswerteeinheit 12 abgegebene Information und stellt fest, ob eine Diskrepanz vorliegt. Beispielsweise erscheint es sehr unwahrscheinlich, daß ein Überschlag vorliegt, wenn alle Raddrehzahlsensoren die gleichen Raddrehzahlen anzeigen und der Lenkwinkelsensor 21 eine Geradeausfahrt signalisiert. In diesem Fall ist anzunehmen, daß entweder der Drehratensensor 10, die Auswerteeinheit 12 oder die Übermittlung der Drehrateninformation an die Steuervorrichtung 14 fehlerhaft ist. In diesem Fall würde eine Auslösung einer Sicherheitsvorrichtung unterbunden werden. Bestätigen die Informationen von den Raddrehzahlsensoren 16a bis 16d jedoch durch das Vorliegen von Diskrepanzen zwischen den Raddrehzahlen die Information der Auswerteeinheit 12, nämlich, daß ein Fahrzeugüberschlag vorliegt, so wird - im vorliegendem Fall - eine Airbagauslöseeinheit 18 entsprechend beaufschlagt, wodurch ein Airbag 20 gezündet wird.

Natürlich können auch andere Auslösegeräte von Sicherheitsvorrichtungen in entsprechender Weise aktiviert werden, so daß beispielsweise andere Airbags, Gurtstraffer und vergleichbare Sicherheitsvorrichtungen aktivierbar werden.

Da die meisten Hardware-Komponenten bei heutigen Fahrzeugen bereits vorhanden sind, bedarf es lediglich einer Softwaremodifikation, um die vorliegende Erfindung umzusetzen. Aus diesem Grunde kann die vorliegende Erfindung in kostengünstiger Weise zur Erhöhung der Sicherheit bei einem Fahrzeug beitragen.

## Patentansprüche

1. Vorrichtung zur Detektion von Überschlägen bei einem Fahrzeug mit wenigstens einem Überschlagssensor (10) zur Erfassung eines bevorstehenden oder ablaufenden Fahrzeugüberschlags und zur Abgabe eines entsprechenden Signals und mit wenigstens zwei Raddrehzahlsensoren (16a -16d), welche ein der jeweiligen Raddrehzahl entsprechendes Signal an eine Steuervorrichtung (14) abgibt, wobei die Steuervorrichtung (14) mittelbar oder unmittelbar mit dem wenigstens einen Überschlagssensor (10) verbunden ist und ein Auslösesignal für ein Sicherheitssystem (20) auf der Basis des Überschlagssignals und unter Berücksichtigung der Raddrehzahlsignale erzeugt, und wobei die Steuervorrichtung (14) derart ausgebildet ist, um aus den Raddrehzahlsignalen der wenigstens zwei Raddrehzahlsensoren allein auf einen anormalen Fahrbetrieb zu schließen und diese Information zur Plausibiltiätsüberprüfung des Überschlagssignals zu verwenden, **dadurch gekennzeichnet, dass** an allen Rädern Raddrehzahlsensoren (16a -16d) vorgesehen sind und erfasst wird, welche zwei der vier Räder zunächst den Bodenkontakt verlieren.

2. Vorrichtung nach Anspruch 1,
**dadurch gekennzeichnet,**
**dass** erfasst wird, ob nach dem Abheben der Räder ein schlagartiges Abbremsen der Räder erfolgt.

3. Vorrichtung nach Anspruch 1 oder 2,
**dadurch gekennzeichnet,**
**dass** als Überrollsensoren (10) Drehraten- und/oder Beschleunigungssensoren verwendet sind.

4. Vorrichtung nach einem der vorhergehenden Ansprüche,
**dadurch gekennzeichnet,**
**dass** ein Lenkwinkelsensor vorgesehen ist, mit dem bei einer Kurvenfahrt die unterschiedlichen Signale von verschiedenen Raddrehzahlsensoren (16a-16d) ausgleichbar sind.

5. Vorrichtung nach einem der vorhergehenden Ansprüche,
**dadurch gekennzeichnet,**
**dass** für alle oder für jeden Überrollsensor eine eigene Auswerteeinheit (12) zur Auswertung des jeweiligen Überrollsignals vorgesehen ist und die Auswerteeinheit (12) mit der Steuervorrichtung (14) verbunden ist.

6. Vorrichtung nach einem der vorhergehenden Ansprüche,
**dadurch gekennzeichnet,**
**dass** als Sicherheitssystem ein Airbag, ein Gurtstraffer oder ein Überrollbügel aktivierbar ist.

## Claims

1. A roll-over device for a vehicle, comprising at least one roll-over sensor (10) for detecting an imminent or actual roll-over of the vehicle and for delivering a corresponding signal and also comprising at least two wheel-speed sensors (16a - 16d) delivering a signal corresponding to a respective wheel speed to a control device (14), wherein the control device (14) is directly or indirectly connected to the at least one roll-over sensor (10) and generates a triggering signal for a safety system (20), based on the roll-over signal and allowing for the wheel-speed signals, and wherein the control device (14) is so constructed that abnormal driving is indicated by the signals from the at least two wheel-speed sensors alone and this information is used for a plausibility check of the roll-over signal, **characterised in that** wheel-speed sensors (16a - 16d) are provided on all wheels and detect which two out of the four wheels first lose contact with the ground.

2. A device according to claim 1, **characterised in that** the sensors detect whether the wheels are abruptly braked after losing contact.

3. A device according to claim 1 or 2, **characterised in that** the roll-over sensors (10) are revolution-rate and/or acceleration sensors.

4. A device according to any of the preceding claims, **characterised in that** a steering-angle sensor is provided for compensating the different signals from different wheel-speed sensors (16a - 16d) during travel round bends.

5. A device according to any of the preceding claims, **characterised in that** a separate unit (12) for evaluating the respective roll-over signal from each or all the roll-over sensors is provided and the evaluating unit (12) is connected to the control device (14).

6. A device according to any of the preceding claims, **characterised in that** the activatable safety system is an airbag, a belt tightener or a roll bar.

## Revendications

1. Dispositif pour détecter des basculements d'un véhicule, comportant au moins un capteur de basculement (10) pour saisir un basculement imminent ou en cours et pour délivrer un signal correspondant, au moins deux capteurs de vitesse de rotation de roue (16a - 16d) délivrant chacun un signal correspondant à la vitesse de rotation de roue, à un dispositif de commande (14) relié directement ou indirectement à au moins un capteur de basculement (10) et qui produit un signal de déclenchement pour un système de sécurité (20), en se basant sur le signal de basculement et en prenant en compte les signaux de vitesse de rotation de roue, ce dispositif de commande (14) étant constitué de manière à conclure, à partir des signaux de vitesse de rotation de roue d'au moins deux capteurs de vitesse de rotation de roue seulement, un fonctionnement de circulation anormal, et à utiliser cette information pour contrôler la plausibilité du signal de basculement,
**caractérisé en ce que**
toutes les roues comportent un capteur de vitesse de rotation de roue (16a - 16d), permettant de détecter les deux roues parmi les quatre, qui perdent d'abord contact avec le sol.

2. Dispositif selon la revendication 1,
**caractérisé en ce que**
après le décollage des roues, on détecte si un freinage brutal des roues à lieu.

3. Dispositif selon la revendication 1 ou 2,
**caractérisé en ce que**
comme capteurs de basculement (10) on utilise des capteurs de taux de giration et/ ou d'accélération.

4. Dispositif selon une des revendications précédentes,
**caractérisé en ce qu'**
un capteur d'angle de direction permet de compenser, lors d'un passage en courbe, les signaux différents provenant des capteurs de vitesse de rotation de roue différents (16a - 16d).

5. Dispositif selon une des revendications précédentes,
**caractérisé en ce que**
pour tous les capteurs de basculement ou pour chaque capteur, une unité d'exploitation (12) permet d'évaluer le signal de basculement correspondant, cette unité (12) étant reliée au dispositif de commande (14).

6. Dispositif selon une des revendications précédentes,
**caractérisé en ce que**
comme système de sécurité, un airbag, un tendeur de ceinture ou un arceau de tonneau peut être activé.
